# EUROPÄISCHE PATENTANMELDUNG

(11) **EP 2 426 092 A1**
(43) Veröffentlichungstag der Anmeldung: **07.03.2012**
(21) Anmeldenummer: 11180218.7
(22) Anmeldetag: 06.09.2011
(51) Int. Cl.: C03B 29/02, E04C 1/42, C03B 23/24

(54) **Verfahren zum Verbinden von zwei Hälften eines Glasbausteines**

(30) Priorität: 06.09.2010 DE 102010044454
(71) Anmelder: Waltec Maschinen GmbH, 96352 Wilhelmsthal-Steinberg (DE)
(72) Erfinder: Zirfas, Ulrich, 96352 Wilhelmsthal (DE)
(74) Vertreter: von Puttkamer · Berngruber

(57) **Zusammenfassung**

Die Anmeldung betrifft ein Verfahren zum Verbinden von zwei Hälften eines Glasbausteines. Bei dem Verfahren werden wenigstens Teilbereiche der Hälften eines Glasbausteines unter Einsatz von IR-Strahlung erwärmt und die erwärmten Hälften werden aneinandergefügt.

## Beschreibung

Die Erfindung betrifft ein Verfahren zum Verbinden von zwei Hälften eines Glasbausteines sowie eine Vorrichtung zur Durchführung des Verfahrens.

Bei der Verbindung von einem Glasteil mit einem weiteren Teil, beispielsweise aus Glas, müssen die beiden Teile zumindest im Bereich der Verbindungsstellen vorzugsweise schnell aufgeheizt werden. Eine schnelle Aufheizung kann beispielsweise dadurch erreicht werden, dass leistungsstarke Oberflächenheizungen, wie beispielsweise Gasbrenner, verwendet werden. Als Oberflächenheizung werden ganz allgemein solche Heizungen bezeichnet, bei denen mindestens 50 % der gesamten Wärmeleistung der Heizquelle in die Oberfläche bzw. in die oberflächennahen Schichten des zu erwärmenden Objektes eingetragen werden. Eine besondere Art an Oberflächenheizungen ist die oben beschriebene Erwärmung mit einer Gasflamme, wobei typischerweise die Flammentemperaturen bei größer 1000 °C liegen. Eine Erwärmung mittels Gasen erfolgt zum größten Teil durch Übertragung der Wärmeenergie des Brenngases auf die Oberfläche des Glases. Um eine gleichmäßige Durchwärmung der Verbindungsstelle des Glases mit Hilfe von Wärmeleistung zu erreichen, ist beim Gasbrenner ein hoher Leistungsantrag erforderlich. Eine derartige Erwärmung ist auf kleine Flächen beschränkt, da eine vollflächige Einbringung der erforderlichen Leistungsdichte mit Hilfe von Gasbrennern nicht möglich ist.

Weitere Nachteile der Erwärmung mit Gasbrennern sind beispielsweise eine relativ unkontrollierte Beflammung sowie das Eintragen von Störgasen, die die Materialbeschaffenheit unerwünscht beeinflussen können.

Aus den Druckschriften DE 199 38 811 A1 und DE 100 29 522 A1 sind beispielsweise Verfahren zur Formgebung von Glaskeramiken unter Einsatz von Infrarot-Strahlung bekannt.

Vor diesem Hintergrund liegt der Erfindung die Aufgabe zugrunde, ein Verfahren und eine Vorrichtung zum Verbinden von zwei Hälften eines Glasbausteines anzugeben, mit dem die zuvor beschriebenen Nachteile vermieden werden.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Die Aufgabe ist bei einem Verfahren zum Verbinden von zwei Hälften eines Glasbausteines gelöst, bei dem wenigstens Teilbereiche der Hälften eines Glasbausteins unter Einsatz von Infrarot-Strahlung (IR-Strahler) erwärmt werden. Die erwärmten Hälften eines Glasbausteins werden anschließend aneinandergefügt.

Die zu verbindenden Hälften weisen in etwa den gleichen Ausdehnungskoeffizienten (α) auf. Bevorzugt unterscheiden sich die Ausdehnungskoeffizienten der zu verbindenden Hälften eines Glasbausteins, abhängig von den jeweiligen Ausdehnungskoeffizienten der Hälften, höchstens in etwa um eine Zehnerpotenz. Bei Materialien, die einen geringen Ausdehnungskoeffizienten aufweisen, können sich diese auch um mehr als eine Zehnerpotenz unterscheiden.

Bei zwei Hälften eines Glasbausteines mit stark unterschiedlichen Ausdehnungskoeffizienten können auch ein oder mehrere Zwischen-Glasteile eingesetzt werden. Die Zwischen-Glasteile bilden eine Abstufung zwischen den beiden Hälften deren Materialien einen stark unterschiedlichen Ausdehnungskoeffizienten aufweisen. Der Ausdehnungskoeffizient des Zwischen-Glasteils liegt vorzugsweise zwischen den Ausdehnungskoeffizienten der zu verbindenden Hälften.

Bevorzugt bestehen die beiden Hälften eines Glasbausteines aus der gleichen Glassorte.

Alternativ können die beiden Hälften eines Glasbausteines auch aus unterschiedlichen Glassorten bestehen.

Besonders bevorzugt werden bei dem Verfahren wenigstens die zu verbindenden Bereiche bzw. Enden der Hälften eines Glasbausteines mittels der IR-Strahler erwärmt.

Bei der Bestrahlung mittels eines oder mehrere IR-Strahler werden die Hälften direkt und/oder indirekt erwärmt. Bei einer indirekten Erwärmung der Hälften gelangt die Strahlung des IR-Strahlers über Reflexion bzw. Streuung auf die Teile.

Die Bestrahlung mittels Infrarotstrahlung kann beispielsweise auch gerichtet erfolgen, wodurch eine gezielte zonenweise Erwärmung vorgenommen werden kann.

Unterstützend oder alternativ zu einer gerichteten IR-Strahlung, können gezielt bestimmte Bereiche der Hälften eines Glasbausteins beispielsweise durch Einbringen von entsprechend ausgestalteten Blenden erwärmt oder im Kalten gehalten werden.

Nach dem Erreichen der Schmelztemperatur im Bereich der Verbindungsstellen werden die zu verbindenden Hälften des Glasbausteins bevorzugt mechanisch miteinander verbunden.

Zur Homogenisierung der Temperatur können die beiden Hälften eines Glasbausteins vorgewärmt werden und/oder um ein gleichmäßigeres Abkühlen zu erreichen, nach dem Verbinden nachgewärmt werden.

Das Vorheizen und/oder das Nachwärmen können in einen herkömmlichen Ofen erfolgen. Alternativ kann das Vorheizen oder Nachwärmen auch in einer Vorrichtung mit IR-Strahlern mit niedriger Leistung erfolgen.

Der IR-Strahler zur Erwärmung der Hälften eines Glasbausteins weist bevorzugt eine Farbtemperatur von größer als 1500 K, besonders bevorzugt größer als 2000 K auf.

Vorzugsweise emittiert der IR-Strahler eine kurzwellige IR-Strahlung von < 2,7 µm Wellenlänge bzw. NIR-Strahlung (Nahes Infrarot).

Besonders bevorzugt ist es, wenn das gesamte Verfahren in einem IR-Strahlungshohlraum durchgeführt wird und die Erwärmung mithilfe von IR-Strahlern als Strahlungsquelle erfolgt.

In einer weiteren Ausführungsform kann zur Erwärmung der Hälften eines Glasbausteins auch eine weitere Wärmequelle, beispielsweise unterstützend mit eingesetzt werden.

Neben dem Verfahren stellt die Erfindung auch eine Vorrichtung zur Verfügung, die sich insbesondere dadurch auszeichnet, dass sie einen Strahlungshohlraum aufweist, dessen Wände IR-Strahlung reflektieren. In dem Strahlungshohlraum ist wenigstens ein IR-Strahler angeordnet. Um die miteinander zu verbindenden Teile in den Strahlungshohlraum wenigstens teilweise einzuführen, weist dieser wenigstens zwei Einführöffnungen auf.

Als IR-Strahler eignen sich vorzugsweise Halogen IR-Quarzglasrohrstrahler. Der IR-Strahler kann auch flächig ausgebildet sein. Der IR-Strahler kann auch Bestandteil einer Innenwand des Strahlungshohlraumes sein. Vorzugsweise beträgt der Anteil der von den Wandflächen reflektierend und/oder gestreuten Strahlung mehr als 50 % der auf diese Fläche auftreffenden Strahlung.

Besonders bevorzugt ist es, wenn der Anteil der von den Wandflächen reflektierten und/oder gestreuten Infrarot-Strahlung mehr als 90 %, insbesondere mehr als 98 % beträgt.

Ein besonderer Vorteil der Verwendung eines IR-Strahlungshohlraumes ist, dass es sich bei Verwendung von sehr stark reflektierendem und/oder rückstreuendem Wandmaterial um einen Resonator hoher Güte Q handelt, der nur mit geringen Verlusten behaftet ist und daher eine hohe Energieausnutzung gewährleistet.

Bei der Verwendung von diffus rückstreuenden Wandmaterialien wird eine besonders gleichmäßige Durchstrahlung aller Volumenelemente des Hohlraumes unter allen Winkeln erreicht. Damit werden etwaige Abschattungseffekte bei komplex geformten Teilen vermieden.

Als rückstreuendes, d.h. remittierendes Wandmaterial können beispielsweise geschliffene Quarzal-Platten Verwendung finden.

Auch andere die IR-Strahlung rückstreuenden Materialien sind als Wandmaterialien oder Beschichtungen des Strahlungshohlraumes möglich.

Um eine Überhitzung der IR-Strahler zu vermeiden, können diese vorteilhafterweise gekühlt, beispielsweise wassergekühlt sein.

Damit sich die Anschlüsse der IR-Strahler bevorzugt im Kaltbereich befinden, kann die Glasröhre des IR-Strahlers länger ausgebildet werden als die Heizwendel in der Glasröhre.

In einer weiteren Ausführungsform umfasst die Vorrichtung weitere Wärmequellen zur Erwärmung der Teile.

Um u.a. die Verbindungstellen der zu verbindenden Hälften des Glasbausteins möglichst gleichmäßig zu erwärmen, weist die Vorrichtung im Strahlungshohlraum Bewegungsvorrichtungen auf. Über die Bewegungsvorrichtung können die Hälften des Glasbausteins im Strahlungshohlraum beispielsweise gedreht oder oszillierend in Bewegung gehalten werden. Durch die Bewegung der Hälften eines Glasbausteins können Deformationen an den Hälften vermieden werden.

Des Weiteren wird ein Glasbaustein angegeben, der aus zwei Hälften besteht. Die beiden Hälften bestehen aus Glas. Die beiden Hälften des Glasbausteins sind unter Verwendung von IR-Strahlung erwärmt und aneinandergefügt.

Durch die Verwendung von IR-Strahlung beim Verbinden von zwei Hälften des Glasbausteins weist die Verbindungsstelle der zu verbindenden Hälften eine homogenere Nahtstelle auf. Bei dem Einsatz von Gasbrennern entsteht eine inhomogene Nahtstelle, da die Gasbrenner keine zirkulär durchgehende Flamme aufweisen, wodurch es zu lokalen Hitzepunkten kommt, an denen das Glas schneller schmilzt. Bei dem Verbinden von zwei Hälften des Glasbausteines werden durch die Verwendung von IR-Strahlung des Weiteren keine Stör- bzw. Rauchgase in den Glasbaustein mit eingebracht und der Glasbaustein weist im Inneren einen sehr niedrigen Feuchtigkeitsanteil auf. Bei der Verwendung von Gasbrennern können Rauchgase und Feuchtigkeit in den Glasbaustein eingebracht werden. Die Feuchtigkeit kondensiert in dem Glasbaustein und kann das Glas angreifen, wodurch es zu einer lokalen Umkristallisation des Glases und der Korrosion des Glases und damit Trübung des Glasbausteines kommen kann.

Weitere Vorteile, Merkmale und Einzelheiten der Erfindung ergeben sich aus der nachfolgenden Beschreibung, in der unter Bezugnahme auf die Zeichnungen verschiedene Ausführungsbeispiele im Einzelnen beschrieben sind. Es zeigen:
- Figur 1: die Planck-Kurve eines möglichen IR-Strahlers mit einer Temperatur von 2400 K,
- Figur 2: den prinzipiellen Aufbau einer Vorrichtung gemäß der Erfindung mit Strahlungshohlraum, und
- Figur 3a und 3b: schematisch das Erwärmen und das anschließende Zusammensetzten von zwei Teilen.

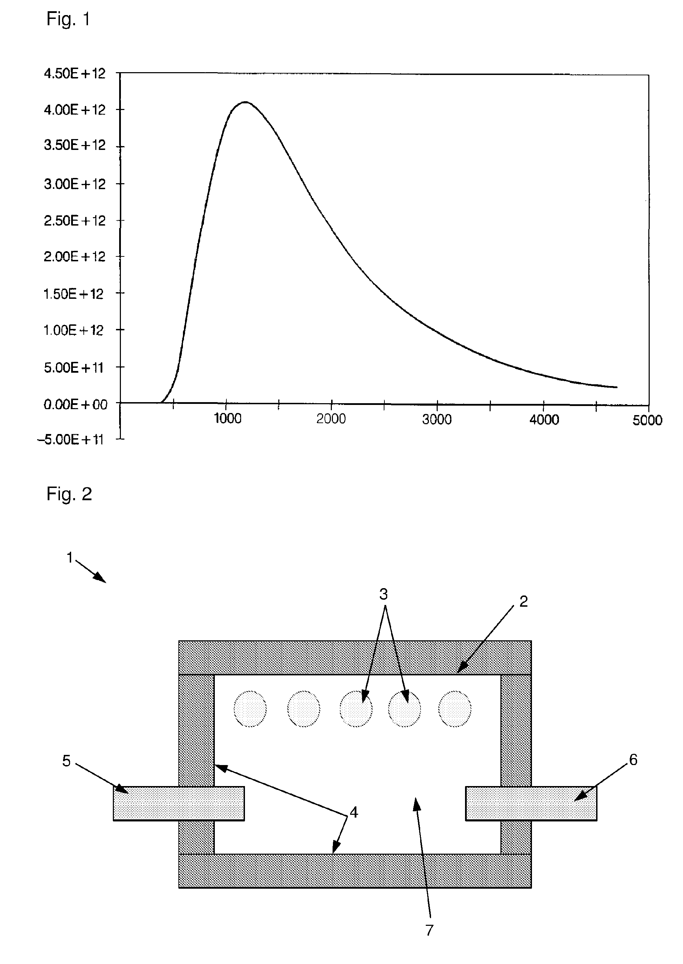

In Figur 1 ist die Intensitätsverteilung einer IR-Strahlungsquelle gezeigt, wie sie zur Erwärmung der zu verbindenden Teile verwendet werden kann. Auf der X-Achse ist die Wellenlänge in nm (Nanometer) und auf der Y-Achse die relative Intensität aufgetragen. Die zur Anwendung gelangenden IR-Strahler können lineare Halogen IR-Quarzrohrstrahler sein, welche bevorzugt eine Farbtemperatur von 2400 K besitzen. Diese IR-Strahler haben entsprechend dem Wienschen Verschiebungsgesetz ihr Strahlungsmaximum bei einer Wellenlänge von 1210 nm.

In Figur 2 ist eine erste Ausführungsform einer Vorrichtung 1 gemäß der Erfindung mit Strahlungshohlraum 7 dargestellt. Die in Figur 2 dargestellte Vorrichtung 1 umfasst eine Vielzahl von IR-Strahlern 3, die unterhalb eines Reflektors 2 angeordnet sind. Der Reflektor 2 umgibt zusammen mit den weiteren Innenwänden 4 den Strahlungshohlraum 7. Durch den Reflektor 2 wird erreicht, dass die von den IR-Strahlern 3 in andere Richtung abgegebenen Leistungen auf die zu verbindenden Hälften 5, 6 eines Glasbausteins gelenkt werden. Die von den IR-Strahlern 3 abgegebene IR-Strahlung durchdringt teilweise die in diesen Wellenbereichen transparenten Hälften 5, 6 und trifft auf die stark reflektierenden bzw. stark streuenden Innenwände 4 der Vorrichtung 1. Für die Innenwände 4 der Vorrichtung 1 eignet sich beispielsweise Quarzal, das auch im Infraroten ungefähr 90 % der auftreffenden Strahlung reflektiert. Die Innenwände 4 der Vorrichtung 1 bilden zusammen mit dem Reflektor 2 einen Strahlungsraum hoher Güte.

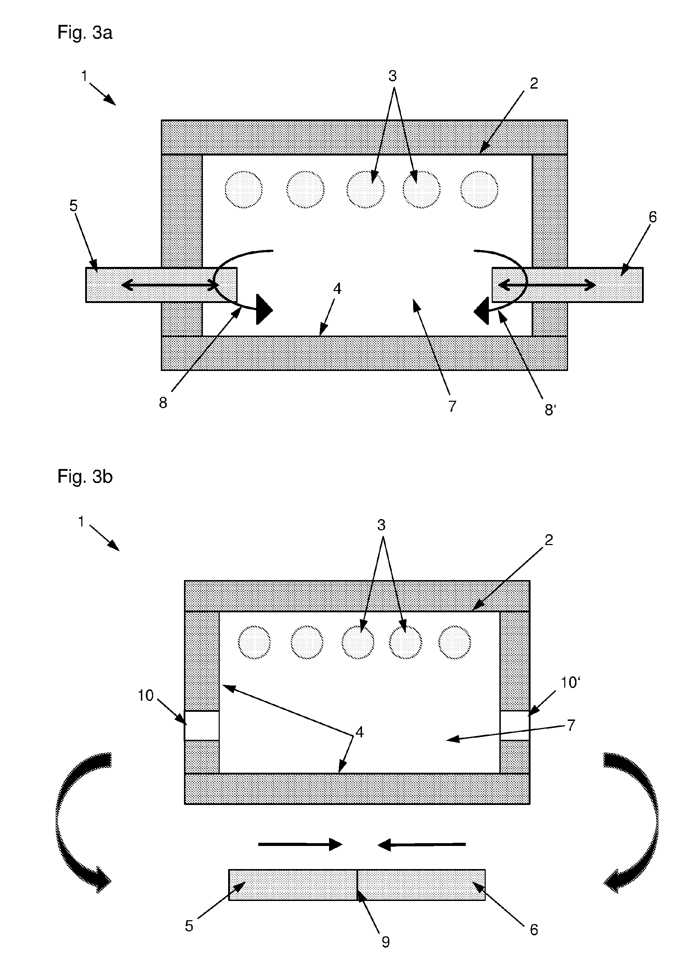

In den Figuren 3a und 3b ist schematisch das Erwärmen und das anschließende Zusammensetzten von zwei Hälften 5, 6 eines Glasbausteins dargestellt. Die IR-Strahler 3 sind im Strahlungshohlraum 7 oberhalb der zu verbindenden Hälften 5, 6 angeordnet. Oberhalb der IR-Strahler 3 befinden sich Reflektoren 2.

Die IR-Strahler 3 erwärmen die zu verbindenden Hälften 5, 6 eines Glasbausteins von der Oberseite. Die Innenwände 4 des Strahlungshohlraums 7 bestehen aus reflektierendem Material oder sind mit reflektierendem Material beschichtet. Die auf die Innenwände auftreffende IR-Strahlung wird zu einem Anteil von mehr als 50 %, vorzugsweise mehr als 90 bzw. 95 %, besonders bevorzugt mehr als 98 % reflektiert. Die zurückreflektierte Strahlung erwärmt beim nochmaligen Durchgang wiederum die Hälften 5, 6. Die zu verbindenden Hälften 5, 6 ragen nur teilweise in den Strahlungshohlraum 7. Die beiden Hälften 5,6 des Glasbausteines sind durch Einführöffnungen 10, 10' in den Strahlungshohlraum 7 eingeführt. Dadurch werden nur die zu verbindenden Enden der Hälften 5, 6 des Glasbausteins erwärmt. Die beiden Hälften 5, 6 des Glasbausteins sind in der, in Figur 3a dargestellten Ausführungsform jeweils auf Bewegungsvorrichtungen 8, 8' angeordnet. Durch eine drehende oder oszillierende Bewegung der Teile 5, 6 können Deformationen der Hälften 5, 6 beim Erwärmen vermieden werden.

Ist die Schmelztemperatur der Hälften 5, 6 des Glasbausteins erreicht, so werden die beiden Hälften 5, 6, wie in Figur 3b dargestellt, aus der Vorrichtung 1 entnommen und außerhalb der Vorrichtung 1 aneinandergefügt. Beim Aneinanderfügen der beiden Hälften 5, 6 des Glasbausteins kann an der Verbindungsstelle eine Nahtstelle 9 entstehen.

### Bezugszeichenliste

- 1: Vorrichtung
- 2: Reflektor
- 3: IR-Strahler
- 4: Innenwände
- 5: erste Hälfte
- 6: zweite Hälfte
- 7: Strahlungshohlraum
- 8, 8': Bewegungsvorrichtung
- 9: Nahtstelle
- 10, 10': Einführöffnung

## Patentansprüche

1. Verfahren zum Verbinden von zwei Hälften (5, 6) eines Glasbausteines,
bei dem wenigstens Teilbereiche der Hälften (5, 6) eines Glasbausteins unter Einsatz von IR-Strahlung erwärmt werden,
und bei dem die beiden erwärmten Hälften (5, 6) eines Glasbausteins anschließend aneinandergefügt werden.

2. Verfahren nach Anspruch 1,
bei dem die erste Hälfte (5) und die zweite Hälfte (6) des Glasbausteines aus der gleichen Glassorte bestehen.

3. Verfahren nach Anspruch 1,
bei dem die erste Hälfte (5) und die zweite Hälfte (6) des Glasbausteines aus unterschiedlichen Glassorten bestehen.

4. Verfahren nach einem der vorstehenden Ansprüchen,
bei dem wenigstens die zu verbindenden Enden der Hälften (5, 6) eines Glasbausteines erwärmt werden.

5. Verfahren nach einem der vorstehenden Ansprüchen,
bei dem die Hälften (5, 6) eines Glasbausteines direkt und/oder indirekt durch wenigstens einen IR-Strahler (3) erwärmt werden.

6. Verfahren nach einem der vorstehenden Ansprüche,
bei dem die Hälften (5, 6) eines Glasbausteines unter Verwendung einer weiteren Wärmequelle erwärmt werden.

7. Verfahren nach einem der vorstehenden Ansprüchen,
bei dem die beiden Hälften (5, 6) eines Glasbausteines nach dem Erreichen deren Schmelztemperatur im Bereich der Verbindungsstellen miteinander verbunden werden.

8. Verfahren nach einem der vorstehenden Ansprüche,
bei dem die Hälften (5, 6) eines Glasbausteines vorgewärmt und/oder nach dem Verbinden nachgewärmt werden.

9. Verfahren nach Anspruch 8,
bei dem die Hälften (5, 6) eines Glasbausteines in einem konventionellen Ofen vorgeheizt und/oder nachbeheizt werden.

10. Verfahren nach einem der vorstehenden Ansprüche,
bei dem der IR-Strahler (3) eine Farbtemperatur größer als 1500 K, besonders bevorzugt größer als 2000 K aufweist.

11. Vorrichtung zur Durchführung des Verfahrens gemäß einem der Ansprüche 1 bis 10,
die einen Strahlungshohlraum (7) aufweist, dessen Innenwände (4) IR-Strahlung reflektieren können,
und in dem wenigstens ein IR-Strahler (3) angeordnet ist, wobei der Strahlungshohlraum (7) wenigstens zwei Einführöffnungen (10, 10') aufweist, durch die zwei zu verbindende Hälften (5, 6) eines Glasbausteines wenigstens teilweise in den Strahlungshohlraum (7) eingeführt werden können.

12. Vorrichtung nach Anspruch 11,
bei der die Reflektivität der Innenwände (4) mehr als 50% der auftreffenden IR-Strahlung beträgt.

13. Vorrichtung nach Anspruch 12,
bei dem die Reflektivität der Innenwände (4) mehr als 90% bevorzugt mehr als 95%, insbesondere mehr als 98% der auftreffenden IR-Strahlung beträgt.

14. Vorrichtung nach einem der Ansprüche 11 bis 13,
bei der das Wandmaterial des Strahlungshohlraumes (7) diffus rückstreuend ist.

15. Vorrichtung nach einem der Ansprüche 11 bis 14,
bei der der IR-Strahler (3) gekühlt, insbesondere wassergekühlt ist.

16. Vorrichtung nach Anspruch 11,
bei der die zu verbindenden Teile (5, 6) über eine Bewegungsvorrichtung (8) in dem Strahlungshohlraum (7) bewegt werden können.

17. Glasbaustein aus zwei Hälften (5, 6),
bei dem die beiden Hälfen (5, 6) aus Glas bestehen und bei dem die beiden Hälften (5, 6) unter Verwendung von IR-Strahlung erwärmt und aneinandergefügt sind.
